# EUROPEAN PATENT SPECIFICATION

(11) **EP 0 835 811 B1**
(45) Date of publication and mention of the grant of the patent: **03.08.2005**
(21) Application number: 97307086.5
(22) Date of filing: 12.09.1997
(51) Int. Cl.: B65B 51/30

(54) **Transverse sealing mechanism in a form-fill-seal packaging machine**
Quersiegelmechanismus einer Maschine zum Formen, Füllen und Siegeln von Verpackungsbeuteln
Mécanisme de scellage transversal dans une machine à former, remplir et sceller des emballages

(30) Priority: 14.09.1996 JP 26523696
(43) Date of publication of application: 15.04.1998
(73) Proprietor: ISHIDA CO., Ltd., Kyoto-shi, Kyoto 606 (JP)
(72) Inventor: Hatozaki, Hirokazu, c/o Ishida Co., Ltd., Ritto-cho, Kurita-gun, Shiga (JP); Haze, Setsuo, c/o Ishida Co., Ltd., Ritto-cho, Kurita-gun, Shiga (JP)
(74) Representative: Skone James, Robert Edmund

(56) References cited:
- EP-A- 0 226 693
- EP-A- 0 368 016
- EP-A- 0 469 819
- EP-A- 0 560 988
- DE-A- 3 919 642
- US-A- 3 986 921

## Description

The present invention relates to a bag making and packaging machine which forms a band-shaped film into a packaging bag and seals an article into the packaging bag and more particularly to such type of bag making and packaging machine that performs an improved pressure control on the transverse sealing at the time of forming a bag.

As disclosed in Japanese Examined Utility Model Publication No. H3-1362, for example, there is known a bag making and packaging machine which operates such that a band-shaped film paid out from a roll is transferred along a transfer route and is bent into a cylinder at the downstream end of the transfer route. The overlapped side edges of the cylindrical film are bonded, the lower end of the film is sealed transversely to thereby form a packaging bag and an article is fed into the bag and then the upper end of the bag is likewise sealed transversely and severed so that packaging bags each having articles sealed therein are produced one by one in succession.

In the above case, the transverse sealing of the above-mentioned cylindrical film is generally performed in such a manner that a pair of members called sealing jaws arranged opposite to each other across the transfer route for the film are brought into contact with each other to thereby thermally bond the cylindrical film. In this case, according to a method which brings the sealing jaws into contact with each other or separates them from each other by merely causing the sealing jaws to take linear reciprocating motions, the sealing of the film can only be made at the point of contact of the sealing jaws so that the transfer of the film has to be stopped for the time required for sealing. Therefore, to meet such disadvantage, there is known a technique that is shown in Japanese Utility Model Publication No. S59-16241 in which the sealing jaws are urged by springs in the direction in which they come into contact with each other and at the same time, they are swung in opposite directions so as to overlap each other across the transfer route so that they are brought into contact with each other for a predetermined period of time against the forces of the springs during the rotation of each of the jaws in the overlapped area. According to this technique, each of the jaws draw a D-shaped locus so that it becomes possible to cause the sealing jaws to follow the film while the film is transferred in sequence thereby extending the film sealing time.

Another example of a bag making and packaging machine which includes such springs is described in US-A-5016426.

Recently, there have been proposed a number of degradable materials such as biodegradable or photodissociable materials for the purpose of protecting the global environment and the packaging materials used as packaging bags, that is, the band-shaped films used with a bag making and packaging machine are shifting to those suitable for such purpose. However, the recent packaging materials including the above type of film are generally formed thinner than the conventional ones so that while the conventional film could have been sealed under a pressure of several hundred kilograms without the necessity of minutely adjusting the sealing pressure, a strict sealing pressure control is required of the recent new type of film.

However, it has been usual that almost all the conventional bag making and packaging machines have fixed sealing pressures which can not be adjusted according to the kinds of films used. For example, in the case of the D-swing sealing jaws disclosed in the above-mentioned Japanese Utility Model Publication No.S59-16241, the sealing jaws are not so constructed as to be delicately controlled in such a manner that the sealing pressure so changes that it is weak at the first and the last stages of the contact period of time of the jaws and strong at the intermediate time and in that case, the sealing pressure is increased or decreased depending on the kind of the film or it is kept constant during the contact period of time of the jaws.

In contrast, in Japanese Unexamined Patent Publication No. S61-190422 (equivalent to US-A-4713047), there is disclosed a technique of adjusting the sealing pressure of the sealing jaws to a target value by controlling a hydraulic pressure such as a pneumatic pressure or oil pressure and in Japanese Patent Publication No. H8-25542, there is disclosed a similar technique of adjusting the sealing pressure by performing a torque control on a servo motor. However, the sealing pressure adjustment through a fluid or a servo motor has a difficulty of its responsiveness so that a minute and delicate pressure control is difficult, and in order to ascertain the pressure generating at the contact surfaces of the sealing jaws, the pressure must be actually measured.

DE-A-3919642 discloses another example of a sealing system where the sealing heads follow a D-shaped path.

EP-A-0560988 discloses a bag making and packaging machine for forming a packaging bag by transversely sealing a cylindrically formed film (F) by bringing a pair of opposing transverse sealing members into contact with opposite sides of a film extending between the sealing members, said bag making and packaging machine comprising a pair of support members for supporting said transverse sealing members, respectively; drive means for moving said support members to bring said
transverse sealing members into contact with the film and to separate from each other; and
wherein the drive means includes rotating means for rotating said support members about respective paths, linear portions of which extend alongside the film transfer direction, the transverse sealing members contacting the opposite sides of the film as they move along the said portions; and wherein the machine further comprises control means for controlling said drive means in such a manner that the centres of rotation of said support members are moved so that the support members follow said linear portion of said path.

In order to control the sealing pressure, a servo motor forming part of the drive means for controlling movement of the centres of rotation of the support members is operated in a torque-controlled mode so that its torque is maintained at a specified constant level. This constant level of compressive force or sealing pressure can be adjusted by varying the magnitude of the specified level. The problem with this arrangement is that it is not possible to achieve minute control of the sealing pressure.

In accordance with the present invention, we provide a bag making and packaging machine for forming a packaging bag by transversely sealing a cylindrically formed film by bringing a pair of opposing transverse sealing members into contact with opposite sides of a film extending between the sealing members, said bag making and packaging machine comprising a pair of support members for supporting said transverse sealing members, respectively; drive means for moving said support members to bring said transverse sealing members into contact with the film and to separate from each other; at least one elastic member interposed between at least one of said support members and one of said transverse sealing members so as to contract in response to simultaneous contact of the transverse sealing members and film and to apply on said transverse sealing members a transverse sealing pressure; and setting means for setting a target sealing pressure to be applied on said cylindrical film by the contact of said sealing members wherein the drive means includes rotating means for rotating said support members about respective paths, linear portions of which extend alongside the film transfer direction, the transverse sealing members contacting the opposite sides of the film as they move along the said portions; and wherein the machine further comprises control means for controlling said drive means in such a manner that the centres of rotation of said support members are moved so that the support members follow said linear portion of said path, with a predetermined spacing therebetween such that when the sealing members contact each other, the elastic member contracts by a predetermined amount and a reaction force proportional to the amount of contraction is applied to the at least one elastic member, the reaction force defines said target transverse sealing pressure at the time of transverse sealing remaining constant during the period of contact of the transverse sealing members.

The present invention has been made to meet the above-mentioned actual situation and provides a bag making and packaging machine which has a favourable responsiveness and which is capable of performing a delicate sealing pressure control for favourably sealing even the recently developed thin films including those made of degradable materials and etc.

Thus, the amount of contraction of the elastic member(s) due to the contact of the transverse, typically horizontal, sealing members on opposite sides of the film is controlled by adjusting through the drive means or the minimum space between the support members at the time of transverse sealing. In that case, since the transverse sealing pressure is proportional to the amount of contraction of the elastic member(s), the transverse sealing pressure is controlled by controlling the drive means and by making the controlled pressure the target transverse sealing pressure, it is possible to realize the transverse sealing pressure corresponding to the shape of the film.

In the above case, since the relationship between the amount of contraction of the elastic member and the transverse sealing pressure relating thereto is known in advance from the modulus of elasticity of the elastic member, the amount of movement of the support members or the minimum space therebetween at the time of transverse sealing can be calculated in advance and accordingly, it is not necessary to perform a feedback control while ascertaining the actually generated transverse sealing pressure thereby obtaining the target transverse sealing pressure with ease.

Further, since the contraction of the elastic member and the transverse sealing pressure as a reaction force thereof generate simultaneously, a pressure control of favourable responsiveness can be made possible.

As described above, a delicate and minute control of the sealing pressure becomes possible so that even thin films made of degradable materials can be treated in a favourable manner.

As the transverse sealing members rotate or swing and are brought into contact with each other for a predetermined period of time during the rotating operation, they transversely seal the cylindrical film, which minute control for making the transverse sealing pressure constant during the period of contact of the transverse sealing members can be performed.

The control means preferably controls the drive means in such a manner that in the transverse sealing member contacting area the opposing contact surfaces of the sealing members move along the transfer route of the film.

Since the transverse sealing of the cylindrical film is performed while the sealing members move over the film transfer route, there is no possibility of the film being stretched by the contact surfaces of the transverse sealing members causing an excessive tensile strength to be applied to the film. Further, in this case, by controlling the rotating angular velocity of the support members through the rotating means, the moving velocity of the contact surfaces of the transverse sealing members over the film transfer route can be varied in a variety of ways, for example, making it identical with the film transfer velocity.

Preferably, there is provided pressure adjusting means for applying a prestress on the elastic member.

Thus the elastic member which contracts due to the contact of the transverse sealing members and applies a transverse sealing pressure on the transverse sealing members, can be made to contract by a predetermined amount in advance whereby even when the elastic member is made to contract by the same amount, it is possible to change the resultant transverse sealing pressure and to minutely adjust with ease the transverse sealing pressure to be applied on the film.

An example of the present invention will now be described with reference to the accompanying drawings, in which:-
Figure 1 is a schematic side view of the entire structure of an example of a bag making and packaging machine according to the present invention;
Figure 2 is a sectional plan view of a transverse sealing device of the bag making and packaging machine shown in Figure 1;
Figure 3 is a view taken along a - a line of Figure 2;
Figure 4 is a sectional plan view of the sealing jaws and support members of the transverse sealing device shown in Figure 2;
Figure 5 is a view taken along a line 5 - 5 in Figure 4;
Figure 6 is a block diagram of a control system diagram of the transverse sealing device;
Figure 7 is a time chart of operations of the sealing jaws; and,
Figure 8 illustrates the operations of the sealing jaws.

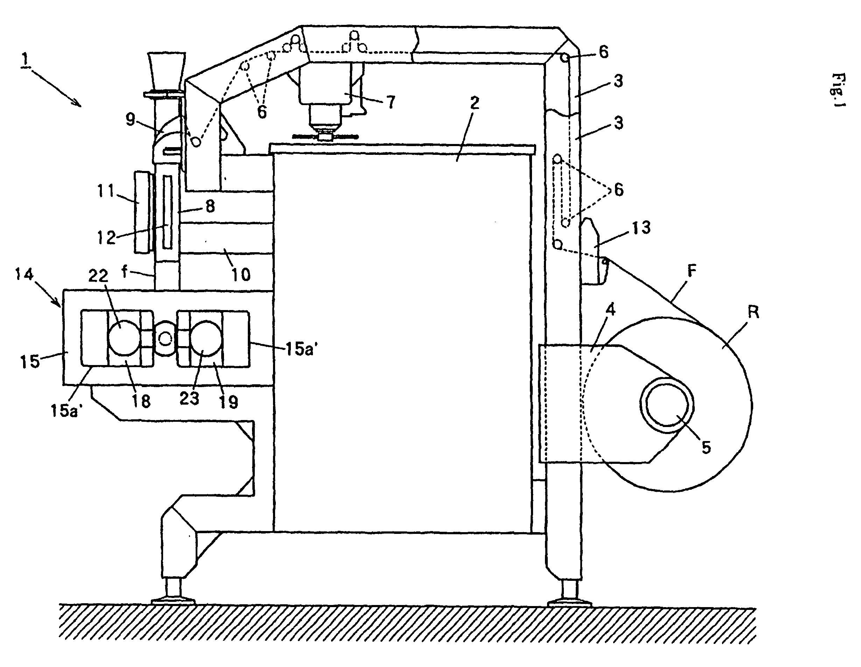

Fig. 1 is a schematic side view of an example of a bag making and packaging machine according to the present invention. To describe the entire structure of the bag making and packaging machine 1 and the flow of a film F by referring to Fig. 1, the machine 1 is of the type that transfers the film continuously. It has a pair of frames 3, 3 extending upward from the rear of a machine body 2 to the front portion thereof and at the back of the frames 3, 3 a roll R for the band-shaped film F is rotatably supported through a support bracket 4 and a drive shaft 5 so that the film F paid out from the roll R is guided by a plurality of rollers 6 mounted between the frames 3,3 and after the film is printed with the manufacturing year, month and date and the like by a printing device 7 arranged at the upper part of the frames 3, 3, it is transferred in front of the machine body 2 along the frames 3, 3.

At the front portion of the frames 3, 3, there are provided an article throw-in chute 8 arranged to extend vertically and a former 9 of a predetermined shape arranged to surround the chute 8 so that the band-shaped film F transferred along the frames 3, 3 is made cylindrical as both side edges of the film are overlapped on the peripheral surface of the chute 8 through the former 9 and then transferred downward along the chute 8 in that state.

Further, in front of the cylindrical chute 8, a vertical sealing device 11 is arranged to face the chute 8 through a L-shaped support arm 10 arranged to extend forward from the machine body 2 so as to embrace the chute 8 whereby both of the overlapped side edges of the cylindrical film f on the peripheral surface of the chute 8 are pressed against the chute 8 and in this state, are thermally bonded together.

Further, on both sides of the cylindrical chute 8, there are provided a pair of crosswise feed belts 12, 12 for continuously transferring the cylindrical film f downward as they adsorb the film under vacuum. The band-shaped film F or the cylindrical film f is continuously transferred along the above-mentioned transfer route in a state in which no excessive tensile force is applied thereon, by the continuous driving of the feed belts 12, 12 in front of the machine body 2 and the rotation of the drive shaft 15 supporting the film roll R. Further, above the film roll R, there is arranged a splicer 13 for connecting a new film to the existing film at the time of film exchange.

Below the cylindrical chute 8, there is arranged a transverse, in this case, sealing device 14 which transversely seals the drooping cylindrical film f transferred downward from the chute 8 and which is incorporated with a cutter for separating the leading portion of the film f from the subsequent portion at the centre of the sealing portion. Next, the above-mentioned transverse sealing device 14 as one of the characteristic portions of the bag making and packaging machine 1 will be described.

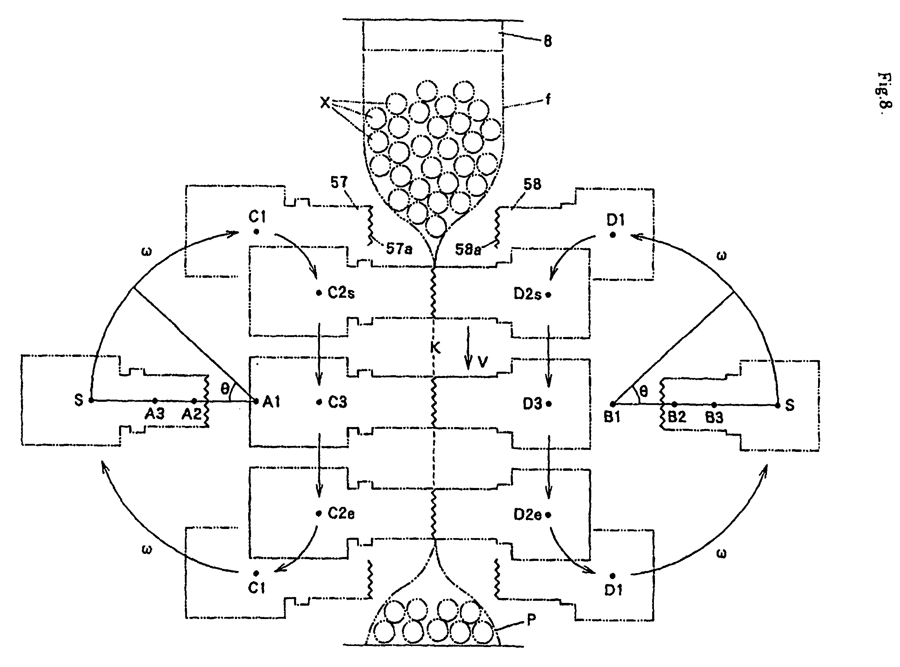

The transverse sealing device 14 is so constructed that a pair of sealing jaws for pressure heating and sealing the cylindrical film f crosswise are moved downward while they clamp the cylindrical film f therebetween, whereby the cylindrical film f or the band-shaped film F can be transversely sealed while the film f is continuously fed without stopping every time when it is transversely sealed. Then, subsequent to the transverse sealing of the cylindrical film f by the transverse sealing device 14, articles X....X are thrown into the chute 8, the cylindrical film f is continuously transferred downward and the upper portion of the film f in which one of the articles X is filled is transversely sealed and severed to discharge a packaged bag P in a repetitive manner (see Fig. 8).

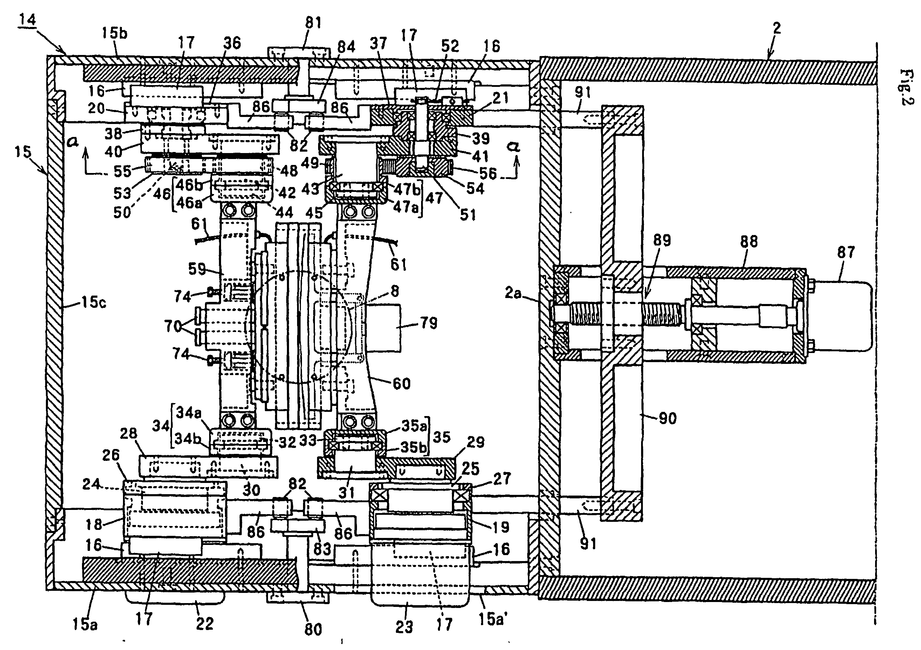

Next, the mechanical structure of the transverse sealing device 14 will be described by referring to Figs. 2 through 5.

The transverse sealing device 14 has a frame 15 comprising a pair of transverse guide plates 15a, 15b extending forward from the machine body 2 and a front plate 15c coupling the front ends of the guide pates 15a, 15b and within a space surrounded by this frame 15 in front of the machine body 2, the sealing and cutting of the cylindrical film f drooping from the cylindrical chute 8 are performed.

At four portions including the upper, lower, front and rear portions of each of the guide plates 15a, 15b there are provided rails 16,...16, respectively, which extend horizontally in the direction of the guide plates 15a, 15b and to these rails 16,...16, four slide bases 18, 19, 20 and 21 are slidably attached, respectively via linear bearings 17.

At the vertical intermediate portions of the front and rear slide bases 18, 19 attached to the left guide plate 15 there are provided servo motors 22 and 23 and shafts 24, 25 fixed on the axes of rotations thereof are rotatably supported by, and project forward from, bearing members 26, 27 clamped to the inner surfaces of the slide bases 18, 19. At the projecting ends of the shafts 24,25 there are provided arm members 28, 29 of a predetermined length so that they rotate or swing about the shafts 24, 25 in response to rotation of the servo motors 22, 23. The left guide plate 15a is provided with openings 15a', 15a' through which the servo motors 22, 23 are allowed to pass lest the forward and rearward sliding of the slide bases 18, 19 should be hindered (see Fig. 1).

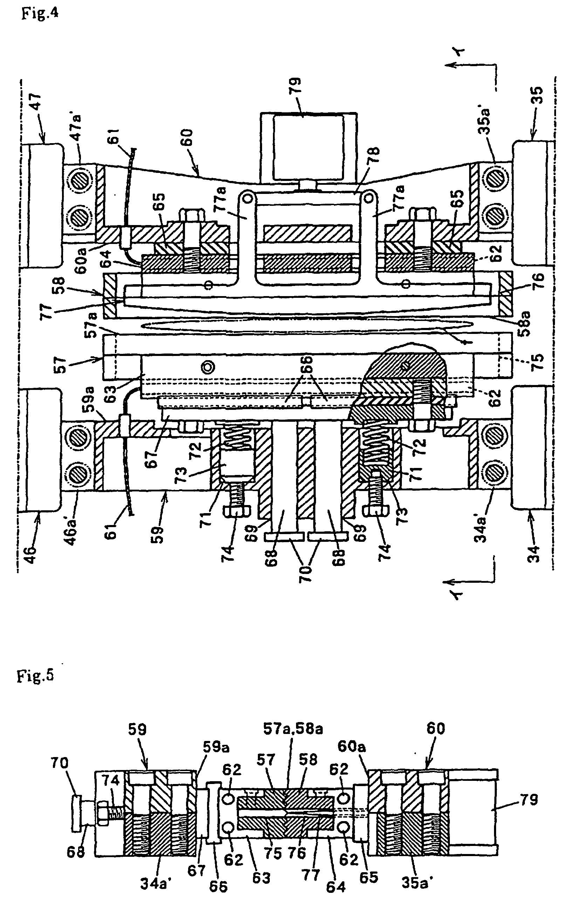

To the swing side ends of the arm members 28, 29, there are fitted shafts 30, 31, respectively, so as to project inward from the arm members and slip preventive plates 32, 33 are fixed to the projecting ends of the shaft 30, 31 and bearing members 34a, 34b; 35a, 35b are assembled so as to cover the projecting ends thereby forming rotors 34, 35 rotatable relative to the arm members 28, 29. On the inner surfaces of the bearing members 34a, 35a which form these rotors 34, 35, there are formed fixing flanges 34a', 35a' for fixing sealing jaw support blocks 59, 60 at one end thereof (see Figs. 4 and 5).

At the vertical intermediate portions of the front and rear slide bases 20, 21 fixed to the right guide plate 15b, driven shafts 38, 39 are rotatably supported by bearing members 36, 37 clamped to the outer surfaces of the slide bases 20, 21 and inwardly project from the slide bases 20, 21. Rightside arms 40, 41 are provided at the projecting ends of the shafts 38, 39 so as to swing about the shafts integrally therewith.

To the swing side ends of the rightside arms 40, 41 there are fitted shafts 42, 43 and bearing members 46a, 46b; 47a, 47b are assembled so as to cover the projecting ends thereby forming rightside rotors 46, 47 which are rotatable relative to the arms 40, 41. In this case, on the inner surfaces of the inner bearing members 46a, 47a for forming the rightside rotors 46, 47 there are also formed fixing flanges 46a', 47a' for fixing the sealing jaw support blocks 59, 60 at the other ends thereof (see Fig. 4). Further, with respect to the rightside rotors 46, 47, toothed pulleys 48, 49 are formed integral with the bearing members 46b, 47 outside thereof.

On the swing axis of the right arms 40, 41, there are provided shafts 50, 51 which pass through the holes drilled in the above-mentioned bearing members 36, 37 clamped to the outer surfaces of the slide bases 20, 21, the driven shafts 38, 39 and the arms 40, 41. These shafts 50, 51 have the outer ends thereof projecting from the bearing members 36, 37 and in this case, the rotations of the shafts 50, 51 are prevented by rigid pins 52, 52 (only one of these pins is shown in Fig. 2) passing therethrough. The driven shafts 38, 39 and the arms 40, 41 rotate about these shafts 50, 51. The inner ends of the shafts 50, 51 project from the arms 40, 41, respectively, and second toothed pulleys 53, 54 which have the same number of teeth as the toothed pulleys 48, 49, respectively, and which make pairs with the pulleys 48, 49, respectively, are caulked to the inner ends of the shafts 50, 51. Further, timing belts 55, 56 are passed around the pulleys 48, 53 and 49, 54.

Of these arms 28, 29, 40, 41, between the front arms 28 and 40 and between the rear arms 29 and 41, there are respectively mounted support blocks 59, 60 for supporting the sealing jaws 57, 58 through the above-mentioned flanges 34a', 35a', 46a', 47a' and arranged to sandwich from front and behind a downward film transfer route K (see Fig. 8) for guiding the cylindrical film f drooping from the cylindrical chute 8. Consequently, by driving the servo motors 22, 23, the front and rear support blocks 59, 60 swing about shafts 24, 38 (point A) and shafts 25, 39 (point B) in front of, and at the rear of, the cylindrical film f on the transfer route K.

The sealing jaws 57, 58 are made of a metallic material of good heat conductivity and as shown in Figs. 4 and 5, they are attached to metallic base members 63, 64 through which heaters 62, .... 62 which, when energized through lead wires 61,...61, heat are longitudinally inserted, respectively. The above-mentioned base member 64 is directly fixed to a support surface 60a of the support block 60 through heat insulating members 65, 65.

A patch plate 67 is attached to the base member 63 through heat insulating members 66, 66 and shafts 68, 68 projecting from the patch plate 67 are fitted into through-holes 69, 69 drilled in the front support block 59 so that the base member 63 is slidably supported longitudinally on the support surface 59a of the support block 59.

In the above case, to the top ends of the shafts 68, 68, there are attached slip-prevention plates 70, 70, respectively, so as to prevent the front base member 63 from slipping out backwardly. Further, on both sides of the through-holes 69, 59 of the front support block 59 there are provided concave portions 71, 71 in which return springs 72, 72 are respectively received and by these springs 72, 72, the front base member 63 is constantly urged backward through the patch plate 67, that is, toward the rear sealing jaw 58. Consequently, when the sealing jaws 57, 58 are brought into contact with each other, the front base member 63 or the front sealing jaw 57 is pressed toward the support block 59 against the forces of the return springs 72, 72 so that the return springs contract and a reaction force proportional to the amount of contraction of each of the springs is applied upon the sealing jaw 57 from the springs so that the reaction force becomes a clamping pressure, that is, a transverse sealing pressure between the sealing jaws 57, 58.

Further, in the above case, the return springs 72, 72 are received by receiving members 73, 73 within the concave portions 71, 71 and the receiving members 73, 73 move forward and rearward within the concave portions 71, 71, respectively, by the rotational adjustments of screws 74, 74 provided on the front surface of the support block 59. Consequently, by adjusting the rotations of the screws 74, 74, the energizing forces of the return springs 72, 72 acting upon the base member 63 are adjusted. That is, by causing, for example, the return springs 72, 72 to contract from the beginning by moving the receiving members 73, 73 forward, even if the springs contract by the same amount due to the contact of the sealing jaws 57, 58, a higher transverse sealing pressure can be obtained so that the transverse sealing pressure to be applied on the film can be minutely controlled with ease.

The projecting end surfaces 57a, 58a of the sealing jaws 57, 58 are each provided with a number of tooth spaces so as to mesh with each other so that the surfaces 57a, 58a become contact surfaces for sandwiching the cylindrical film f therebetween and at the vertical intermediate portions of the contact surfaces 57a, 58a there are provided longitudinal slits 75, 76, respectively. Further, within the slit 76 of the rear sealing jaw 58 there is housed a cutter 77 for cutting the cylindrical film f crosswise. The cutter 77 has extensions 77a, 77a extending rearward after passing through holes drilled in the base member 64 and the support block 60 so that when a connecting member 78 mounted between the extensions 77a, 77a is caused to move forward and rearward by a drive device 79 such as an air cylinder, the cutter 77 appears from a slit 76 of the rear sealing jaw 58 toward a slit 75 of the front sealing jaw 57.

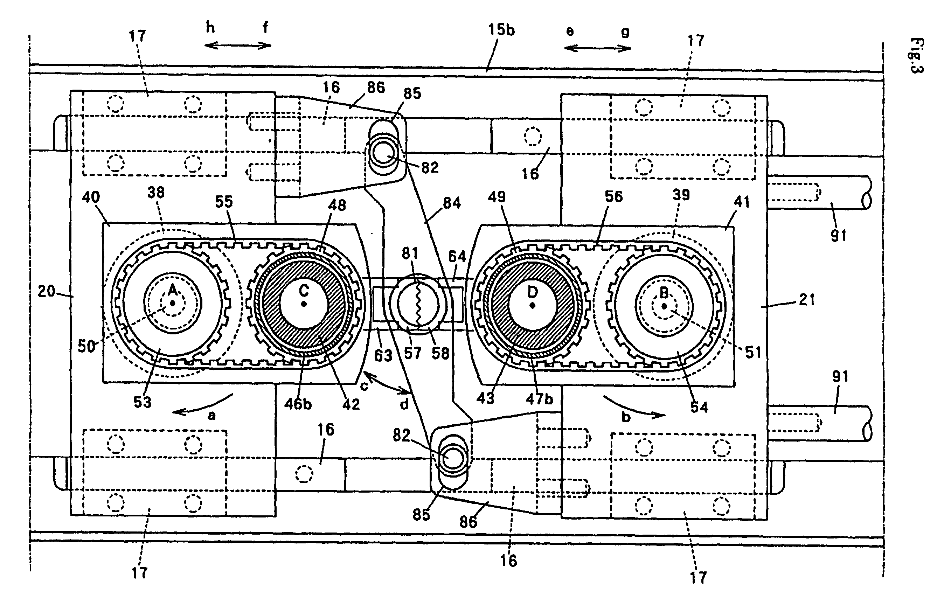

The servo motors 22, 23 cause, as shown by arrows a and b in Fig. 3, the sealing jaws 57, 58 to swing in opposite directions so as to allow the sealing jaws 57, 58 to move downward in the same direction as the transfer direction of the cylindrical film f when the sealing jaws come near the film transfer route K. Further, the support blocks 59, 60 are mounted such that the sealing surfaces 59a, 60a, that is, the contact surfaces 57a, 58a located there around face each other across the film transfer route K. In this case, the facing relationship between the sealing jaws 57, 58 is maintained irrespective of the swinging of the arms 28, 29, 40, 41 by the toothed pulleys 48, 49 formed on the rightside rotors 46, 47 being linked to the stationary pulleys 53, 54 of the shafts 50, 51 through the timing belts 53, 54.

Meanwhile, as shown in Figs. 2 and 3, the right and left guide plates 15a, 15b are respectively provided with shafts 80, 81 at the longitudinal central portion and at the vertical substantially central portion substantially corresponding to the film transfer route K and a pair of cranks 83, 84 each having cam followers 82, 82 are rotatably attached to the shafts 80, 81, respectively. Further, on the slide bases 18, 19, 20, 21, there are provided brackets 86, 86 having elongated holes 85, 85 into which the above-mentioned cam followers 82, 82 fit and the left slide bases 18, 19 and the right slide bases 20, 21 are respectively coupled by the cranks 83, 84.

Further, as shown in Fig. 2, within the machine body 2 there is provided a third servo motor 87 by means of a frame 88 and a beam 90 extending horizontally in the width direction of a ball screw 89 on the rotary shaft of the servo motor 87. Further, as also shown in Fig. 3, a pair of upper and lower columnar members 91, 91 extending forward from both side ends of the beam 90 are provided and the front ends thereof pass through a front wall surface 2a of the machine body 2 so as to be connected to the rear slide bases 19, 21.

Accordingly, by driving the servo motor 87, the rear slide bases 19, 21 are moved forward and rearward through the ball screw 89, the beam 90 and the columnar members 91, 91 and in this case, as shown by arrows c and d in Fig. 3, when the rear slide bases 19, 21 move forward as shown by an arrow e by the rotations of the cranks 83, 84, the front slide bases 18, 20 move rearward as shown by an arrow f, and inversely, when the rear slide bases 19, 21 move rearward as shown by an arrow g, the front slide bases 18, 20 move forward as shown by an arrow h, whereby the sealing jaws 57, 58 are caused to come into contact with, and leave away from, each other across the film transfer route K.

With the above structure, in the transverse sealing device 14, the pair of sealing jaws 57, 58 arranged opposite to each other across the film transfer route K for the cylindrical film f swing about the point A (the shafts 25, 39, 51) by the swing servo motors 22, 23 and the centres A and B of swinging of the sealing jaws 57, 58 come close to, and leave away from, each other by the third servo motor 87 for forward and rearward movements of the sealing jaws.

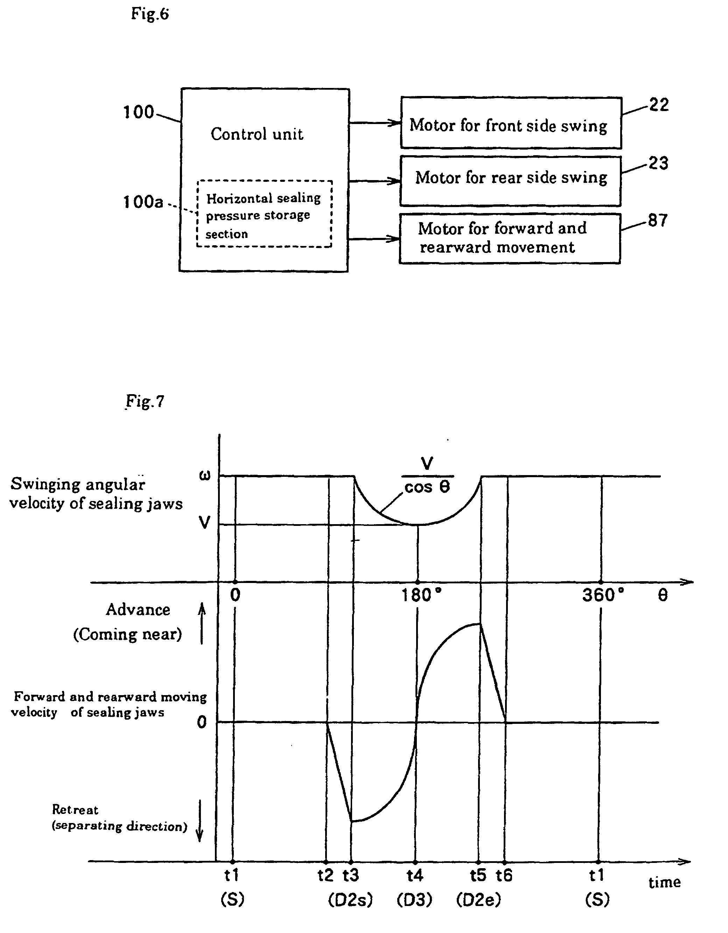

The transverse sealing device 14 is, as shown in Fig. 6, provided with a control unit 100 having a storage section 100a in which the optimum transverse sealing pressures corresponding to the kinds and shapes of the film are stored and this control unit controls the servo motors 22, 23, 87 so as to realize an addressed optimum sealing pressure for the film.

Next, a transverse sealing pressure adjustment operation to be performed by the control unit 100 will be described by referring to a time chart of Fig. 7 and the corresponding diagram of the operation of the sealing jaws shown in Fig. 8. It should be noted that the sealing jaws 57, 58 are so controlled as to swing and move forward and rearward in an image-like fashion across the film transfer route K so that in the time chart of Fig. 7 only a case viewed from the rear sealing jaw 58 is illustrated.

First, it is assumed that the centre C (the centre of the front jaw 57 in Fig. 3) of the shafts 30, 42 provided at the swing side ends of the front arms 28, 40 on which the front sealing jaw 57 is arranged and the centre D (the centre of the rear jaw 58 in Fig, 3) of the shafts 31, 43 provided at the swing side ends of the rear arms 29, 41 be located at a position S which is the remotest from the film transfer route K (time t1). In this case, as shown in Fig. 8, the swing centre A of the front sealing jaw 57 is located at a comparatively rearward position as designated by A1 while the swing centre B of the rear sealing jaw 58 is located at a comparatively forward position as designated by B1 with the distance between the centres A and B being shortened. Further, the sealing jaws 57, 58 swing at a predetermined angular velocity ω. Note that when the swing centres of the jaws are A1 and B1, the centres of the jaws are shown by C1 and D1, respectively.

Accordingly, when the sealing jaws 57, 58 swing to come near the film transfer route K in the above state, the swing circles of both of the jaws overlap and during the overlapping period of time, the contact surfaces 57a, 58a come into contact with each other with the cylindrical film f clamped therebetween.

In the above case, the control unit 100 begins to shift the swing centre of the front sealing jaw 57 forward from A1 from a time t2 which is a little earlier than a time t3 at which the sealing jaws 57, 58 begin to come into contact with each other and the swing centre of the rear sealing jaw 58 rearward from the point B1. Subsequently, at the contact start time t3, the swing centre of the front sealing jaw 57 is made to be A2 with the centre of the jaw 57 lying at a position C2s and the swing centre of the rear sealing jaw 58 is made to be B2 with the centre of the jaw 58 lying at a position D2s so that both of the sealing jaws 57, 58 come into contact with each other. The positions of the swing centres A2, B2 and the positions of the swing centres C2S and D2s are those at which the return springs 72, 72 contract due to the contact of the jaws 57, 58 and the resultant sealing pressure becomes the optimum sealing pressure for-the film addressed from the storage section 100a.

The control unit 100 thereafter causes the sealing jaws 57, 58 to move linearly downward so that the distance between the centre C of the jaw 57 and the centre D of the jaw 58 becomes constant. That is, the control unit 100 so controls the sealing jaws 57, 58 that the cylindrical film f moves along the film transfer route K while the film is held sandwiched by the sealing members under the optimum sealing pressure.

That is, as shown in Fig. 7, from the contact starting time t3 up to a contact intermediate time t4 during which the arms 28, 29, 40, 41 become horizontal toward the direction of contact as they swing, the control unit 100 shifts the swing centre A of the front sealing jaw 57 forward along a sine curve as from A2 to A3 and at the same time, shifts the swing centre B of the rear sealing jaw 58 along a sine curve as from B2 to B3. Further, from the contact intermediate time t4 up to a contact termination time t5, the control unit 100 shifts the swing centre A of the front sealing jaw 57 rearward as from A3 to A2 again and at the same time, shifts the swing centre B of the rear sealing jaw 58 forward as from B3 to B2. Thus, by varying the distance between the swing centres A and B, the centres C and D of the sealing members 57, 58 move linearly downward as C2s, C3, C2e or D2s, D3, D2e and since the distance is kept constant, a minute control of keeping the transverse sealing pressure at the optimum value during the contact period can be performed.

Further, since the transverse sealing of the cylindrical film f is performed while the film is transferred on the transfer route K, there arises no problem of the cylindrical film f being stretched crosswise by the sealing jaws 57, 58 to expand.

In addition, in the above case, since the forward shifting of the swing centre A of the front sealing jaw 57 and the rearward shifting of the swing centre B of the rear sealing jaw 58 are started at the time t2 which is earlier than the contact starting time t3, the sealing jaws 57, 58 come into contact with each other smoothly at the position C2s or D2s. Further, unless the forward and rearward movement motor 87 is driven from the time t2 which is earlier than the contact starting time t3, the motor 87 has to be started up at a stretch at the contact starting time t3 resulting in hindering the smooth control operation.

During the contact period (t3 - t5), the control unit 100 controls the angular velocity swinging of the sealing jaws 57, 58 so that the downward moving velocity of the contact surfaces 57a, 58a over the film transfer route K becomes equal to the transfer velocity V of the cylindrical film f. That is, assuming that the swing angle of the sealing jaws 57, 58 from the time t1 be θ, the vertical component of their velocity may be expressed by ω.cosθ and the angular velocity of swing with ω θ having a constant value V becomes (V/cos θ) and the control unit 100 causes the sealing jaws 57, 58 to swing at the angular velocity of (V/cos θ) during the contact period (t3 - t5).

Then, up to a time t6 after the termination of the contact of the sealing jaws 57, 58, the control unit 100 continues to shift the swing centre A of the front sealing jaw 57 rearward and then shift to A1 again and also shift the swing centre B of the rear sealing jaw 58 forward and then to B1 again thus allowing the sealing jaws 57, 58 to repeat such one cycle of operation.

## Claims

1. A bag making and packaging machine (1) for forming a packaging bag by transversely sealing a cylindrically formed film (F) by bringing a pair of opposing transverse sealing members (57,58) into contact with opposite sides of a film extending between the sealing members, said bag making and packaging machine comprising a pair of support members (59,60) for supporting said transverse sealing members (57,58), respectively; drive means (22,23) for moving said support members to bring said transverse sealing members into contact with the film and to separate from each other; at least one elastic member (72) interposed between at least one of said support members (59,60) and one of said transverse sealing members (57,58) so as to contract in response to simultaneous contact of the transverse sealing members and film and to apply on said transverse sealing members a transverse sealing pressure; and setting means (100) for setting a target sealing pressure to be applied on said cylindrical film by the contact of said sealing members (57, 58) wherein the drive means includes rotating means (28,29,40,41) for rotating said support members (59,60) about respective paths, linear portions of which extend alongside the film transfer direction, the transverse sealing members (57,58) contacting the opposite sides of the film as they move along the said portions; and wherein the machine further comprises control means (100) for controlling said drive means in such a manner that the centres of rotation of said support members (59,60) are moved so that the support members follow said linear portion of said path, with a predetermined spacing therebetween such that when the sealing members (57,58) contact each other, the elastic member (72) contracts by a predetermined amount and a reaction force proportional to the amount of contraction is applied to the at least one elastic member, the reaction force defines said target transverse sealing pressure at the time of transverse sealing remaining constant during the period of contact of the transverse sealing members.

2. A bag making and packaging machine according to Claim 1, wherein said control means (100) is adapted to control said drive means (22,20) in such a manner that in the transverse sealing member contacting area, the contact surfaces of said transverse sealing members move along the transfer route of said film.

3. A bag making and packaging machine according to claim 1 or claim 2, wherein the control means (100) is adapted to adjust the rotating means to vary the transverse sealing pressure.

4. A bag making and packaging machine according to claim 3, wherein the rotating means comprises a pair of arms (28,29,40,41) supporting respective support members at one end and being pivoted at the other end, the control means varying the location of the or each pivoted end.

5. A bag making and packaging machine according to any of the preceding claims, wherein the or each elastic member (72) comprises a compression spring.

6. A bag making and packaging machine according to any of the preceding claims, wherein elastic member(s) (72) are provided between only one support member and the corresponding sealing member.

7. A bag making and packaging machine according to any one of the preceding Claims, which is provided with pressure adjusting means (74) which applies a prestress on said elastic member.

## Patentansprüche

1. Beutelherstell- und -verpackungsmaschine (1) zum Erzeugen eines Verpackungsbeutels durch ein in Querrichtung erfolgendes Versiegeln eines zylindrisch ausgebildeten Films (F), indem ein Paar an gegenüberstehenden Querversiegelungselementen (57, 58) mit entgegengesetzten Seiten eines Films, der sich zwischen den Versiegelungselementen erstreckt, in Kontakt gebracht wird, wobei die Beutelherstell- und -verpackungsmaschine ein Paar an Stützelementen (59, 60) für ein jeweiliges Stützen der Querversiegelungselemente (57, 58), eine Antriebseinrichtung (22, 23) zum Bewegen der Stützelemente derart, dass die Querversiegelungselemente mit dem Film in Kontakt gebracht werden und voneinander getrennt werden, zumindest ein elastischen Element (72), das zwischen zumindest einem der Stützelemente (59, 60) und einem der Querversiegelungselemente (57, 58) so angeordnet ist, dass es sich im Ansprechen auf einen gleichzeitigen Kontakt der Querversiegelungselemente und des Films zusammenzieht und auf die Querversiegelungselemente einen Querversiegelungsdruck aufbringt, und eine Einstelleinrichtung (100) für ein Einstellen eines Zielversiegelungsdrucks, der auf den zylindrischen Film durch den Kontakt der Versiegelungselemente (57, 58) aufgebracht wird, aufweist, wobei die Antriebseinrichtung eine Dreheinrichtung (28, 29, 40, 41) zum Drehen der Stützelemente (59, 60) um jeweilige Bahnen hat, wobei lineare Abschnitte von diesen sich entlang der Filmübertragungsrichtung erstrecken, wobei die Querversiegelungselemente (57, 58) mit den entgegengesetzten Seiten des Films in Kontakt stehen, wenn sie sich entlang dieser Abschnitte bewegen, und die Maschine des weiteren eine Steuereinrichtung (100) aufweist, um die Antriebseinrichtung so zu steuern, dass die Drehmitten der Stützelemente (59, 60) so bewegt werden, dass die Stützelemente dem linearen Abschnitt der Bahn folgen, wobei ein vorbestimmter Abstand zwischen ihnen derart besteht, dass dann, wenn die Querversiegelungselemente (57, 58) miteinander in Kontakt stehen, das elastische Element (72) um einen vorbestimmten Betrag sich zusammenzieht und eine Reaktionskraft, die zu dem Zusammenziehbetrag proportional ist, auf das zumindest eine elastische Element aufgebracht wird, wobei die Reaktionskraft definiert, dass der Zielquerversiegelungsdruck zu dem Zeitpunkt des Querversiegelns während der Kontaktzeitspanne der Querversiegelungselemente konstant bleibt.

2. Beutelherstell- und -verpackungsmaschine gemäß Anspruch 1, wobei
die Steuereinrichtung (100) daran angepasst ist, die Antriebseinrichtung (22, 20) derart zu steuern, dass in dem Kontaktbereich des Querversiegelungselements die Kontaktflächen der Querversiegelungselemente sich entlang der Übertragungsroute des Films bewegen.

3. Beutelherstell- und -verpackungsmaschine gemäß Anspruch 1 oder 2, wobei
die Steuereinrichtung (100) daran angepasst ist, die Dreheinrichtung so einzustellen, dass der Querversiegelungsdruck variiert.

4. Beutelherstell- und -verpackungsmaschine gemäß Anspruch 3, wobei
die Dreheinrichtung ein Paar an Armen (28, 29, 40, 41) aufweist, die die jeweiligen Stützelemente an einem Ende stützen und an dem anderen Ende gedreht werden, wobei die Steuereinrichtung den Ort von dem oder von jedem gedrehten Ende variiert.

5. Beutelherstell- und -verpackungsmaschine gemäß einem der vorherigen Ansprüche, wobei
die oder jedes elastische Element (72) eine Druckfeder aufweist.

6. Beutelherstell- und -verpackungsmaschine gemäß einem der vorherigen Ansprüche, wobei
das / die elastische(n) Element(e) (72) zwischen lediglich einem Stützelement und dem entsprechenden Versiegelungselement vorgesehen ist (sind).

7. Beutelherstell- und -verpackungsmaschine gemäß einem der vorherigen Ansprüche, die mit einer Druckeinstelleinrichtung (74) versehen ist, die eine Vorspannung auf das elastische Element aufbringt.

## Revendications

1. Machine de formation de sachets et d'emballage (1) pour former un sachet d'emballage en scellant transversalement un film mis sous forme cylindrique (F) en mettant en contact une paire d'éléments de scellement transversaux opposés (57, 58) avec les côtés opposés d'un film qui s'étend entre les éléments de scellement, ladite machine de formation de sachets et d'emballage comprenant une paire d'éléments de support (59, 60) pour supporter lesdits éléments de scellement transversaux (57, 58), respectivement, un moyen d'entraînement (22, 23) pour déplacer lesdits éléments de support afin de mettre lesdits éléments de scellement transversaux en contact avec le film et de les séparer l'un de l'autre, au moins un élément élastique (72) intercalé entre au moins l'un desdits éléments de support (59, 60) et l'un desdits éléments de scellement transversaux (57, 58) destiné à se contracter en réponse au contact simultané des éléments de scellement transversaux et du film et à appliquer sur lesdits éléments de scellement transversaux une pression de scellement transversale, et un moyen de réglage (100) pour établir une pression de scellement cible à appliquer sur ledit film cylindrique par le contact desdits éléments de scellement (57, 58), le moyen d'entraînement comprenant un moyen de rotation (28, 29, 40, 41) pour faire tourner lesdits éléments de support (59, 60) autour de chemins respectifs, dont des parties linéaires s'étendent suivant la direction de transfert du film, les éléments de scellement transversaux (57, 58) touchant les côtés opposés du film lorsqu'ils se déplacent le long desdites parties, et la machine comprenant en outre un moyen de commande (100) pour commander ledit moyen d'entraînement de telle manière que les centres de rotation desdits éléments de support (59, 60) sont déplacés de façon que les éléments de support suivent ladite partie linéaire dudit chemin, avec un espacement prédéterminé entre eux, de sorte que lorsque les éléments de scellement (57, 58) se touchent, l'élément élastique (72) se contracte d'un degré prédéterminé et une force de réaction proportionnelle au degré de contraction est appliquée audit au moins un élément élastique, la force de réaction définissant ladite pression de scellement transversal cible au moment du scellement transversal restant constante pendant la période de contact des éléments de scellement transversaux.

2. Machine dé formation de sachets et d'emballage selon la revendication 1, dans laquelle ledit moyen de commande (100) est adapté pour commander ledit moyen d'entraînement (22, 20) de telle manière que dans la zone de contact des éléments de scellement transversaux, les surfaces de contact desdits éléments de scellement transversaux se déplacent le long du trajet de transfert dudit film.

3. Machine de formation de sachets et d'emballage selon la revendication 1 ou 2, dans laquelle ledit moyen de commande (100) est adapté pour ajuster le moyen de rotation afin de faire varier la pression de scellement transversal.

4. Machine de formation de sachets et d'emballage selon la revendication 3, dans laquelle le moyen de rotation comprend une paire de bras (28, 29, 40, 41) qui supportent des éléments de support respectifs à une extrémité et qui sont montés à pivotement à l'autre extrémité, le moyen de commande faisant varier l'emplacement de la ou de chaque extrémité pivotante.

5. Machine de formation de sachets et d'emballage selon l'une quelconque des revendications précédentes, dans laquelle le ou chaque élément élastique (72) comprend un ressort de compression.

6. Machine de formation de sachets et d'emballage selon l'une quelconque des revendications précédentes, dans laquelle le ou les élément(s) élastique(s) (72) sont placés entre un seul élément de support et l'élément de scellement correspondant.

7. Machine de formation de sachets et d'emballage selon l'une quelconque des revendications précédentes, qui est munie d'un moyen de réglage de pression (74) qui applique une précontrainte sur ledit élément élastique.
